# EUROPEAN PATENT SPECIFICATION

(11) **EP 2 996 411 B1**
(45) Date of publication and mention of the grant of the patent: **08.11.2017**
(21) Application number: 15183930.5
(22) Date of filing: 04.09.2015
(51) Int. Cl.: H04W 52/28

(54) **METHOD AND DEVICE FOR ADJUSTING TRANSMISSION POWER**
VERFAHREN UND VORRICHTUNG ZUR EINSTELLUNG VON SENDELEISTUNG
PROCÉDÉ ET DISPOSITIF PERMETTANT D'AJUSTER LA PUISSANCE DE TRANSMISSION

(30) Priority: 11.09.2014 CN 201410459320
(43) Date of publication of application: 16.03.2016
(73) Proprietor: Xiaomi Inc., Beijing 100085 (CN)
(72) Inventor: ZHANG, Pengfei, Haidian District, Beijing 100085 (CN); CHEN, Yong, Haidian District, Beijing 100085 (CN); WANG, Yidong, Haidian District, Beijing 100085 (CN); LIU, Tiejun, Haidian District, Beijing 100085 (CN)
(74) Representative: Reeve, Nicholas Edward

(56) References cited:
- US-A1- 2003 100 312
- US-A1- 2005 136 961
- US-B1- 8 229 430
- Cisco Systems: "Wireless Device Profiling and Policy Classification Engine on WLC", , 1 August 2014 (2014-08-01), XP055228167, Retrieved from the Internet: URL:http://www.cisco.com/c/en/us/td/docs/w ireless/controller/technotes/7-5/NativePro filing75.pdf [retrieved on 2015-11-12]

## Description

### TECHNICAL FIELD

The present disclosure relates to the field of network devices and, more particularly, to a method and a device for adjusting transmission power.

### BACKGROUND

With the daily popularization of electronic devices and smart household appliances in users' houses, a router has been increasingly important for the daily life of people.

The electronic devices and smart household appliances in a user's house may access the router through a WIFI (WIreless-FIdelity) network. Generally speaking, the router may send a WIFI broadcast signal to the surrounding area; when the electronic device receives the WIFI broadcast signal, it may send a wireless access request to the router, and after the router successfully validates the wireless access request, the electronic device accesses the WIFI network provided by the router.

It is found however that the foregoing manner at least has the following defects: for the consideration of ensuring through-wall performance, a number of routers adopt a relative high wireless transmission power, which not only wastes resources, but which also has an influence on human health.

US2003/100312, US2005/136961 and US 8229430 disclose methods and systems for adjusting the signal strength of a signal.

### SUMMARY OF THE INVENTION

According to a first aspect of embodiments of the present disclosure, there is provided a A method for adjusting transmission power of a gateway device, wherein the method is applied in a gateway device, and comprises: acquiring an access device identity; acquiring a predetermined wireless transmission power corresponding to the access device identity, each access device identity corresponding to a respective predetermined wireless transmission power; and adjusting current transmission power of the gateway device according to the predetermined wireless transmission power; characterised in that, the step of adjusting the current transmission power according to the predetermined wireless transmission power comprises: sending an adjustment request to an access device corresponding to the access device identity or an administrator device, the access device corresponding to the access device identity or the administrator device being configured to feed an adjustment response back according to the adjustment request; and when the received adjustment response represents that the adjustment is allowed, adjusting the current transmission power to the predetermined wireless transmission power.

In one embodiment, the acquiring the predetermined wireless transmission power corresponding to the access device identity includes: when the number of the access device identities is two or more, inquiring a priority corresponding to each access device identity, each access device identity being corresponding to a respective priority; and acquiring a predetermined wireless transmission power corresponding to the access device identity having the highest priority.

In one embodiment, the inquiring the priority corresponding to each access device identity includes: acquiring a current time; acquiring a priority corresponding relationship corresponding to the current time, each time period being corresponding to a respective priority corresponding relation, and the priority corresponding relationship being a corresponding relationship between the access device identity and the priority; and inquiring the priority corresponding to each access device identity from the priority corresponding relationship corresponding to the current time.

Optionally, the method further includes: receiving a first setting signal, the first setting signal being configured to set a wireless transmission power corresponding to any access device identity; and saving the access device identity and the set predetermined wireless transmission power corresponding to the access device identity according to the first setting signal.

Optionally, the method further includes: receiving a second setting signal, the second setting signal being configured to set a priority corresponding to any access device identity; and
saving the access device identity and the set priority corresponding to the access device identity according to the second setting signal.

Optionally, the method further includes: receiving a third setting signal, the third setting signal being configured to set a priority corresponding to any access device identity within a target time period; and generating a priority corresponding relationship corresponding to the target time period according to the third setting signal, the priority corresponding relationship including the access device identity and the set priority corresponding to the access device identity.

In one embodiment, the acquiring the access device identity includes: after one access device successfully accesses to the gateway device, acquiring the access device identity of this access device; or, acquiring the access device identity of each access device that accesses to the gateway device every predetermined time interval.

According to a second aspect of embodiments of the present disclosure, there is provided a device for adjusting transmission power of a gateway device, wherein the device is applied in a gateway device, and comprises: an identity acquisition module configured to acquire an access device identity; a power acquisition module configured to acquire a predetermined wireless transmission power corresponding to the access device identity, each access device identity corresponding to a respective predetermined wireless transmission power; and a power adjustment module configured to adjust current transmission power of the gateway device according to the predetermined wireless transmission power; wherein the device is configured to: send an adjustment request to an access device corresponding to the access device identity or an administrator device, the access device corresponding to the access device identity or the administrator device being configured to feed an adjustment response back according to the adjustment request; and when the received adjustment response represents that the adjustment is allowed, adjust the current transmission power to the predetermined wireless transmission power. In one embodiment, the power acquisition module includes: a priority inquiring submodule configured to, when the number of the access device identities is two or more, inquire a priority corresponding to each access device identity, each access device identity being corresponding to a respective priority; and a power acquisition submodule configured to acquire a predetermined wireless transmission power corresponding to the access device identity having the highest priority.

In one embodiment, the priority inquiring submodule includes: a time acquisition submodule configured to acquire a current time; a priority acquisition submodule configured to acquire a priority corresponding relationship corresponding to the current time, each time period being corresponding to a respective priority corresponding relation, and the priority corresponding relationship being a corresponding relationship between the access device identity and the priority; and a time-based priority inquiring submodule configured to inquire the priority corresponding to each access device identity from the priority corresponding relationship corresponding to the current time.

Optionally, the device further includes: a first receiving module configured to receive a first setting signal, the first setting signal being configured to set a predetermined wireless transmission power corresponding to any access device identity; and a first saving module configured to save the access device identity and the set predetermined wireless transmission power corresponding to the access device identity according to the first setting signal.

Optionally, the device further includes: a second receiving module configured to receive a second setting signal, the second setting signal being configured to set a priority corresponding to any access device identity; and a second saving module configured to save the access device identity and the set priority corresponding to the access device identity according to the second setting signal.

Optionally, the device further includes: a third receiving module configured to receive a third setting signal, the third setting signal being configured to set a priority corresponding to any access device identity within a target time period; and a priority generation module configured to generate a priority corresponding relationship corresponding to the target time period according to the third setting signal, the priority corresponding relationship including the access device identity and the set priority corresponding to the access device identity.

In one embodiment, the identity acquisition module includes: a first acquisition submodule configured to, after one access device successfully accesses to the gateway device, acquire the access device identity of this access device; or, a second acquisition submodule configured to acquire the access device identity of each access device that accesses to the gateway device every predetermined time interval.

In one embodiment, the power adjustment module includes: a request sending submodule configured to send an adjustment request to an access device corresponding to the access device identity or an administrator device, the access device corresponding to the access device identity or the administrator device being configured to feed an adjustment response back according to the adjustment request; and a power adjustment submodule configured to, when the received adjustment response represents that the adjustment is allowed, adjust the current transmission power to the predetermined wireless transmission power.

According to a third aspect of embodiments of the present disclosure, there is provided a device for adjusting transmission power, including: a processor; and a memory for storing instructions executable by the processor; wherein the processor is configured to: acquire an access device identity; acquire a predetermined wireless transmission power corresponding to the access device identity, each access device identity corresponding to a respective predetermined wireless transmission power; and adjust current transmission power according to the predetermined wireless transmission power.

The present invention also provides a computer program, which when executing on a processor of a terminal, performs the above method.

The technical solutions provided by the embodiments of the present disclosure may provide the following advantageous effects: through acquiring the access device identity, acquiring the predetermined wireless transmission power corresponding to the access device identity, and adjusting the current transmission power according to the predetermined wireless transmission power, problems such as a waste of resources and influence on the human health caused by a number of routers employing a higher wireless transmission power are solved; and, effects of adjusting the wireless transmission power to a rational wireless transmission power by a gateway device according to the user requirements are achieved.

It is to be understood that both the foregoing general description and the following detailed description are exemplary and explanatory only and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart of a method for adjusting transmission power, according to an exemplary embodiment.
Fig. 2A is a flow chart of a method for adjusting transmission power, according to another exemplary embodiment.
Fig. 2B is a block diagram of an interface related to the method for adjusting transmission power, according to another exemplary embodiment.
Fig. 2C is a block diagram of another interface related to the method for adjusting transmission power, according to another exemplary embodiment.
Fig. 3 is a flow chart of a method for adjusting transmission power, according to one another exemplary embodiment.
Fig. 4 is a flow chart of a method for adjusting transmission power, according to further another exemplary embodiment.
Fig. 5 is a block diagram of a device for adjusting transmission power, according to an exemplary embodiment.
Fig. 6 is a block diagram of a device for adjusting transmission power, according to another exemplary embodiment.
Fig. 7 is a block diagram of a device, according to an exemplary embodiment.

Specific embodiments of the present disclosure have been shown through the accompanying drawings above, and will be described in detail hereinafter. The accompanying drawings and text descriptions are not intended to limit the scope of the conception of the present disclosure through any manner, but to explain the concept of the present disclosure for those skilled in the art with reference to specific embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of devices and methods consistent with some aspects related to the invention as recited in the appended claims.

It should be illustrated that the transmission power involved in the embodiment refers to transmission power of a gateway device while providing a wireless network. Accordingly, corresponding to an electronic device, the transmission power is just a signal intensity received by the electronic device. The gateway device may be a router or a switch.

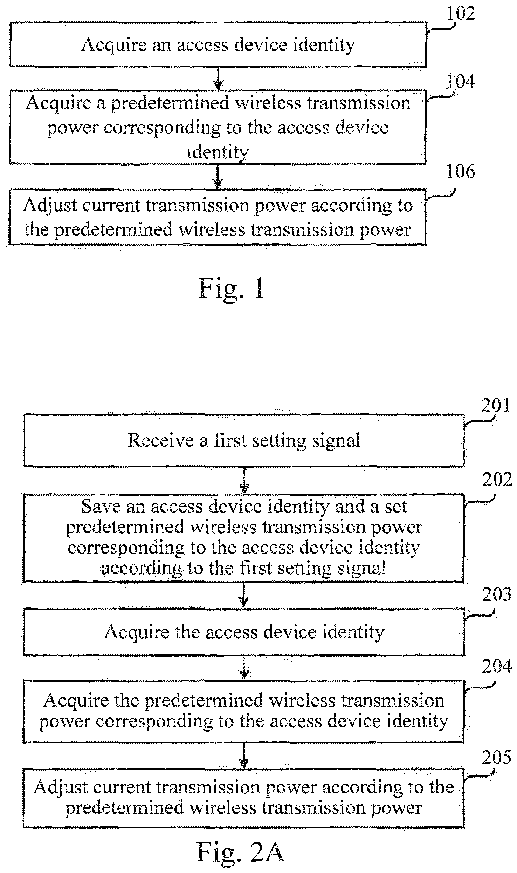

Fig. 1 is a flow chart of a method for adjusting transmission power, according to an exemplary embodiment. In the embodiment, the method for adjusting transmission power is applied to a gateway device for illustration. The method for adjusting transmission power may include the following steps.

In step 102, an access device identity is acquired.

In step 104, a predetermined wireless transmission power corresponding to the access device identity is acquired, each access device identity being corresponding to its respective predetermined wireless transmission power.

In step 106, current transmission power is adjusted according to the predetermined wireless transmission power.

In conclusion, in the method for adjusting transmission power provided by the embodiments, the access device identity is acquired, the predetermined wireless transmission power corresponding to the access device identity is acquired, and the current transmission power is adjusted according to the predetermined wireless transmission power, thus problems such as waste of resources and influence on the human health caused by a number of routers employing a higher wireless transmission power are solved, and effects of adjusting the wireless transmission power to a rational wireless transmission power by a gateway device according to the user requirements are achieved.

Fig. 2A is a flow chart of a method for adjusting transmission power, according to another exemplary embodiment. In the embodiment, the method for adjusting transmission power is applied to a router for illustration. The method for adjusting transmission power may include the following steps.

In step 201, a first setting signal is received, the first setting signal being configured to set a wireless transmission power corresponding to any access device identity.

For example, the router receives the first setting signal, the first setting signal being configured to set a wireless transmission power corresponding to any access device identity.

For instance, a user logs in and manages a router through a webpage or a mobile client, and sends a first setting signal to the router through the webpage or the mobile client. For example, the first setting signal is configured to set a wireless transmission power corresponding to a mobile phone that is corresponding to an access device identity *a* as *a.*

For another example, the router provides 5 optional wireless transmission power levels in advance, which are as shown in Table 1:

**Table 1**

| Wireless transmission power level | Wireless transmission power | Suggestions |
|---|---|---|
| Stronger | *a* mW | Recommended in case of far distance, many obstacles |
| Strong | *b* mW | Recommended in case of relatively far distance, some obstacles |
| Intermediate | *c* mW | Recommended in case of intermediate distance, no obstacle, ordinary crowd |
| Weak | *d* mW | Recommended in case of close distance, ordinary crowd |
| Weaker | *e* mW | Recommended in case of close distance, crowd including "the elderly, infirm, sick, disabled and pregnant" |

The user may select to set a corresponding wireless transmission power level for the access device according to the application scene thereof, and the wireless transmission power corresponding to the wireless transmission power level is used as the wireless transmission power corresponding to the access device.

In step 202, the access device identity and the set predetermined wireless transmission power corresponding to the access device identity are saved according to the first setting signal.

The router saves the access device identity and the set predetermined wireless transmission power corresponding to the access device identity according to the first setting signal.

In the embodiment, as shown in Table 2, the router saves the access device identity (i.e., mobile phone *a*) and the set predetermined wireless transmission power *a* corresponding to the access device identity (i.e., mobile phone *a*) according to the first setting signal.

Table 2 shows that the router saves the access device identity and the set predetermined wireless transmission power corresponding to the access device identity according to the first setting signal when there is only one access device.

**Table 2**

| Access device identity | Set predetermined wireless transmission power |
|---|---|
| mobile phone *a* | *a* |

In step 203, an access device identity is acquired.

When a wireless network is accessed by an electronic device, the router determines an identity of this device (i.e., access device identity). The access device identity may be an MAC address of the access device.

The step 203 may be implemented through the following two different manners.

In the first manner, after one access device successful accesses to the wireless network, the router acquires the access device identity of the access device that accesses to the wireless network.

In the second manner, the router acquires the access device identity of each access device that accesses to the wireless network every predetermined time interval.

The predetermined time interval may either be preset in the router, or be set by the user according to the application conditions.

In the embodiment, the method for the router to determine or acquire the access device identity is not limited.

In step 204, a predetermined wireless transmission power corresponding to the access device identity is acquired, each access device identity being corresponding to its respective predetermined wireless transmission power.

The router acquires the predetermined wireless transmission power corresponding to the access device identity, each access device identity being corresponding to its respective predetermined wireless transmission power. Different access device identities may correspond to the same or different predetermined wireless transmission power.

When there is only one access device, i.e., a mobile phone *a*, the router acquires a predetermined wireless transmission power corresponding to the mobile phone *a.*

For instance, the router inquires from Table 2 and obtains that the predetermined wireless transmission power corresponding to the mobile phone *a* is *a* mW.

In step 205, current transmission power is adjusted according to the predetermined wireless transmission power.

The router adjusts the current transmission power of the router according to the acquired predetermined wireless transmission power. The router may adjust the current transmission power directly according to the acquired predetermined wireless transmission power. Moreover, the router may, after inquiring the user, adjust the current transmission power according to a feedback of the user.

When the router adjusts the current transmission power according to the feedback of the user, the step 205 may include, but is not limited to the following sub-steps.

In the first sub-step, the router sends an adjustment request to the access device corresponding to the access device identity or an administrator device, the access device or the administrator device being configured to feed an adjustment response back according to the adjustment request.

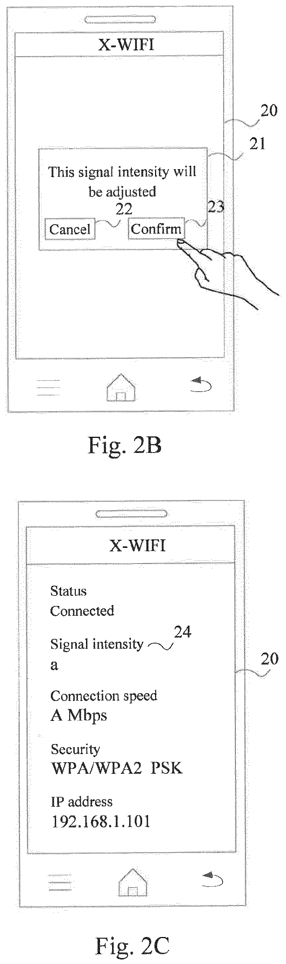

For instance, as shown in Fig. 2B, the router sends an adjustment request to the mobile phone *a*, and after receiving the adjustment request 21 sent by the router, the mobile phone *a* displays the adjustment request in an interface 20 thereof. If the user taps "Cancel" button 22, it represents that the adjustment is not allowed; and if the user taps "Confirm" button 23, it represents that the adjustment is allowed.

Also, the router may send the adjustment request to the administrator device, wherein the administrator device may be a certain terminal preset by the user.

In the second sub-step, when the received adjustment response represents that the adjustment is allowed, the router adjusts the current transmission power to the predetermined wireless transmission power.

For instance, as shown in Fig. 2C, when the received adjustment response sent by the mobile phone *a* represents that the adjustment is allowed, the router adjusts the current transmission power to the predetermined wireless transmission power; and when displaying in the interface 20 of the mobile phone *a*, a signal intensity 24 received by the mobile phone *a* is adjusted to *a.*

In conclusion, in the method for adjusting transmission power provided by the embodiments, the access device identity is acquired, the predetermined wireless transmission power corresponding to the access device identity is acquired, and the current transmission power is adjusted according to the predetermined wireless transmission power, thus problems such as waste of resources and influence on the human health caused by a number of routers employing a relative high wireless transmission power are solved, and effects of adjusting the wireless transmission power to a rational wireless transmission power by a gateway device according to the user requirements are achieved.

Also, in the method for adjusting transmission power provided by the embodiments, after a successful access of one access device is achieved, the access device identity of this access device is acquired, or the access device identity of each access device that achieves the access is acquired every predetermined time interval, thus the effects of acquiring the access device identity in time and dynamically adjusting the wireless transmission power of the gateway device are achieved.

Furthermore, in the method for adjusting transmission power provided by the embodiments, the adjustment request is sent to the access device corresponding to the access device identity or the administrator device, and the current transmission power is adjusted to the predetermined wireless transmission power when the received adjustment response represents that the adjustment is allowed, thus the effects of inquiring the user whether to adjust the current transit power to the predetermined wireless transmission power and adjusting the current transmission power after getting the permission of the user are achieved, and the router is prevent from adjusting the current transmission power when the user needs no adjustment.

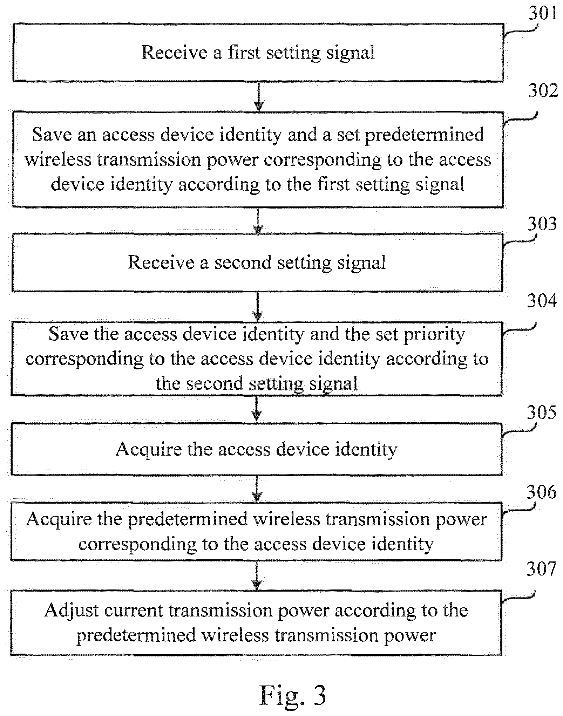

Fig. 3 is a flow chart of a method for adjusting transmission power, according to further another exemplary embodiment. In the embodiment, the method for adjusting transmission power is applied to a router for illustration. The method for adjusting transmission power may include the following steps.

In step 301, a first setting signal is received, the first setting signal being configured to set a wireless transmission power corresponding to any access device identity.

For example, the router receives a first setting signal, the first setting signal being configured to set a wireless transmission power corresponding to any access device identity.

For instance, a user logs in and manages a router through a webpage or a mobile client, and sends the first setting signal to the router through the webpage or the mobile client. For example, the first setting signal is configured to set a wireless transmission power corresponding to a mobile phone that is corresponding to an access device identity *a* as *a.*

For another example, the router provides 5 optional wireless transmission power levels in advance, which are as shown in Table 1 above.

For example, there are two or more access devices in the embodiment, a user may set a wireless transmission power corresponding to a mobile phone *a* as *a*, set a wireless transmission power corresponding to a tablet *b* as *b,* set a wireless transmission power corresponding to an access device 001 as *c*, set a wireless transmission power corresponding to an access device 002 as *d*, and set a wireless transmission power corresponding to an access device 003 as *e.*

In step 302, the access device identity and the set predetermined wireless transmission power corresponding to the access device identity are saved according to the first setting signal.

The router saves the access device identity and the set predetermined wireless transmission power corresponding to the access device identity according to the first setting signal.

For instance, the router saves the mobile phone *a* and the set predetermined wireless transmission power *a* corresponding to the mobile phone *a*, saves the tablet *b* and the set predetermined wireless transmission power *b* corresponding to the tablet *b,* saves the access device 001 and the set predetermined wireless transmission power *c* corresponding to the access device 001, saves the access device 002 and the set predetermined wireless transmission power *d* corresponding to the access device 002, and saves the access device 003 and the set predetermined wireless transmission power *e* corresponding to the access device 003 according to the first setting signal, which are as shown in Table 3 below.

Table 3 shows set predetermined wireless transmission powers corresponding to different access device identities.

**Table 3**

| Access device identity | Set predetermined wireless transmission power |
|---|---|
| Mobile phone *a* | *a* mW |
| Tablet *b* | *b* mW |
| Access device 001 | *c* mW |
| Access device 002 | *d* mW |
| Access device 003 | *e* mW |

In step 303, a second setting signal is received, the second setting signal being configured to set a priority corresponding to any access device identity.

The router also receives a second setting signal, the second setting signal being configured to set a priority corresponding to any access device identity.

Table 4 shows priorities corresponding to different access device identities.

**Table 4**

| Access device identity | Priority |
|---|---|
| Mobile phone *a* | *High* |
| Tablet *b* | *Highest* |
| Access device 001 | *Low* |
| Access device 002 | *Lower* |
| Access device 003 | *Lowest* |

For example, there are two or more access devices in the embodiment as shown in Table 4, the priority of the mobile phone *a* is *High*, the priority of the tablet *b* is *Highest*, the priority of the access device 001 is *Low*, the priority of the access device 002 is *Lower*, and the priority of the access device 003 is *Lowest*; therefore, the second setting signal is configured to set the priority corresponding to the mobile phone *a* as high, set the priority corresponding to the tablet *b* as the highest, set the priority corresponding to the access device 001 as low, set the priority corresponding to the access device 002 as lower, and set the priority corresponding to the access device 003 as the lowest.

In step 304, the access device identity and the set priority corresponding to the access device identity are saved according to the second setting signal.

The router saves the access device identity and the set priority indicator corresponding to the access device identity according to the second setting signal.

In the embodiment, the router saves the mobile phone *a* and the priority *High* corresponding to the mobile phone *a*, saves the tablet *b* and the priority *Highest* corresponding to the tablet *b,* saves the access device 001 and the priority *Low* corresponding to the access device 001, saves the access device 002 and the priority *Lower* corresponding to the access device 002, and saves the access device 003 and the priority *Lowest* corresponding to the access device 003 according to the second setting signal.

In step 305, an access device identity is acquired.

When a wireless network is accessed by an electronic device, the router acquires an access device identity. The access device identity may be an MAC address of the access device.

The step 305 may be implemented through the following two different manners.

In the first manner, after a successful access of one access device is achieved, the router acquires an access device identity of this access device.

In the second manner, the router acquires an access device identity of each access device that achieves the access every predetermined time interval.

The predetermined time interval may either be preset in the router, or be set by the user according to the application conditions.

In the embodiment, the method for the router to acquire the access device identity is not limited.

In step 306, a predetermined wireless transmission power corresponding to the access device identity is acquired, each access device identity being corresponding to its respective predetermined wireless transmission power.

The router acquires the predetermined wireless transmission power corresponding to the access device identity, each access device identity being corresponding to its respective predetermined wireless transmission power.

The step 306 may include, but is not limited to the following sub-steps.

In the first sub-step, when the number of the access device identities is two or more, the router inquires a priority corresponding to each access device identity, each access device identity being corresponding to its respective priority.

For example, 5 access devices accesses to the router through a wireless network at the same time, and Table 5 shows each access device identity, the predetermined wireless transmission power corresponding to each access device identity and the priority corresponding to each access device identity.

**Table 5**

| Access device identity | Predetermined wireless transmission power | Priority |
|---|---|---|
| Mobile phone *a* | *a* | *High* |
| Tablet *b* | *b* | *Highest* |
| Access device 001 | *c* | *Low* |
| Access device 002 | *d* | *Lower* |
| Access device 003 | *e* | *Lowest* |

In the second sub-step, a predetermined wireless transmission power corresponding to the access device identity having the highest priority is acquired.

The router acquires the access device identity having the highest priority, and acquires the predetermined wireless transmission power corresponding to the access device identity having the highest priority.

In the embodiment, with reference to Table 5, the router acquires the predetermined wireless transmission power *b* corresponding to the access device having the highest priority, i.e., tablet *b.*

In step 307, current transmission power is adjusted according to the predetermined wireless transmission power.

The router adjusts the current transmission power according to the predetermined wireless transmission power. The router may adjust the current transmission power directly according to the acquired predetermined wireless transmission power. The router may also, after inquiring the user, adjust the current transmission power according to the feedback of the user.

When the router adjusts the current transmission power according to the feedback of the user, the step 307 may include, but is not limited to the following sub-steps.

In the first sub-step, the router sends an adjustment request to the access device corresponding to the access device identity or an administrator device, the access device or the administrator device being configured to feed an adjustment response back according to the adjustment request.

For instance, after the tablet *b* receives the adjustment request sent by the router to the access device corresponding to the tablet *b* or the administrator device, a prompt box is displayed in an interface of the tablet *b*. If the user taps "Cancel" button, it represents that the adjustment is not allowed; and if the user taps "Confirm" button, it represents that the adjustment is allowed.

Moreover, the router may send the adjustment request to the administrator device, wherein the administrator device may be a certain terminal preset by the user.

In the second sub-step, when the received adjustment response represents that the adjustment is allowed, the router adjusts the current transmission power to the predetermined wireless transmission power.

When the adjustment response sent by an electronic device represents that the adjustment is allowed, the router adjusts the current transmission power to the predetermined wireless transmission power.

For instance, when the adjustment response sent by the tablet *b* represents that the adjustment is allowed, the router adjusts the current transmission power to the predetermined wireless transmission power.

Certainly, if the current transmission power of the router and the inquired predetermined wireless transmission power are the same, then the router does not need to adjust the current transmission power.

In conclusion, in the method for adjusting transmission power provided by the embodiments, the access device identity is acquired, the predetermined wireless transmission power corresponding to the access device identity is acquired, and the current transmission power is adjusted according to the predetermined wireless transmission power, thus problems such as waste of resources and influence on the human health caused by a number of routers employing a relative high wireless transmission power are solved, and effects of adjusting the wireless transmission power to a rational wireless transmission power by a gateway device according to the user requirements are achieved.

Also, in the method for adjusting transmission power provided by the embodiments, after a successful access of one access device is achieved, the access device identity of this access device is acquired, or the access device identity of each access device that achieves the access is acquired every predetermined time interval, thus the effects of acquiring the access device identity in time and dynamically adjusting the wireless transmission power of the gateway device are achieved.

Furthermore, in the method for adjusting transmission power provided by the embodiments, the adjustment request is sent to the access device corresponding to the access device identity or the administrator device, and the current transmission power is adjusted to the predetermined wireless transmission power when the received adjustment response represents that the adjustment is allowed, thus the effects of inquiring the user whether to adjust the current transit power to the predetermined wireless transmission power and adjusting the current transmission power after getting the permission of the user are achieved, and the router is prevent from adjusting the current transmission power when the user needs no adjustment.

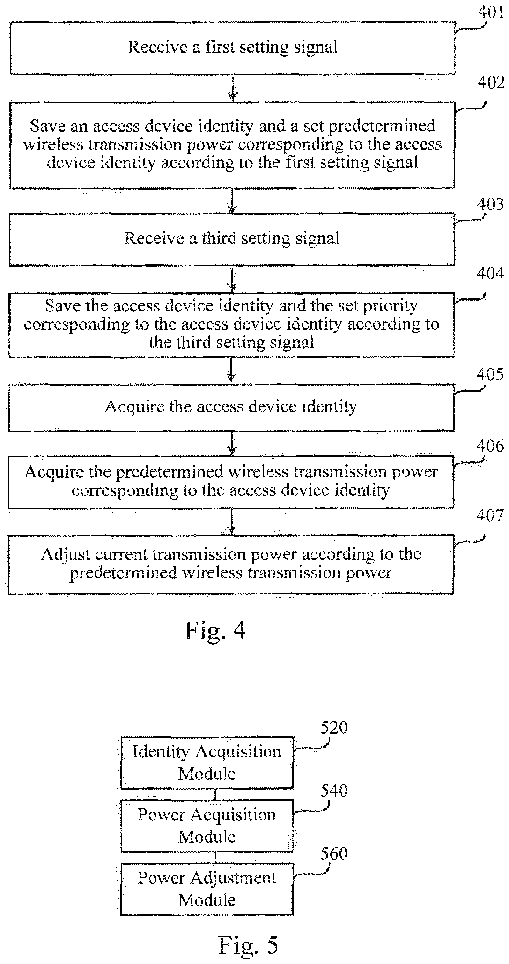

Fig. 4 is a flow chart of a method for adjusting transmission power, according to still another exemplary embodiment. In the embodiment, the method for adjusting transmission power is applied to a router for illustration. The method for adjusting transmission power may include the following steps.

In step 401, a first setting signal is received, the first setting signal being configured to set a wireless transmission power corresponding to any access device identity.

For example, the router receives a first setting signal, the first setting signal being configured to set a wireless transmission power corresponding to any access device identity

For instance, a user logs in and manages a router through a webpage or a mobile client, and sends a first setting signal to the router through the webpage or the mobile client. For example, the first setting signal is configured to set a wireless transmission power corresponding to a mobile phone that is corresponding to an access device identity *a* as *a.*

For another example, the router provides 5 optional wireless transmission power levels in advance, which are as shown in Table 1 above.

For example, there are two or more access devices in the embodiment, a user may set a wireless transmission power corresponding to a mobile phone *a* as *a*, set a wireless transmission power corresponding to a tablet *b* as *b,* set a wireless transmission power corresponding to a computer as *f*, and set a wireless transmission power corresponding to a network TV as *g.*

In step 402, the access device identity and the set predetermined wireless transmission power corresponding to the access device identity are saved according to the first setting signal.

The router saves the access device identity and the set predetermined wireless transmission power corresponding to the access device identity according to the first setting signal.

For example, the router saves the mobile phone *a* and the wireless transmission power *a* corresponding to the mobile phone *a*, saves the tablet *b* and the wireless transmission power *b* corresponding to the tablet *b,* saves the computer and the wireless transmission power *f* corresponding to the computer, and saves the network TV and the wireless transmission power *g* corresponding to the network TV according to the first setting signal, which are as shown in Table 6 below.

Table 6 shows the wireless transmission power corresponding to the access device identity, i.e., the signal intensity corresponding to the access device identity.

**Table 6**

| Access device identity | Set predetermined wireless transmission power |
|---|---|
| Mobile phone *a* | *a* |
| Tablet *b* | *b* |
| Computer | *f* |
| Network TV | *g* |

In step 403, a third setting signal is received, the third setting signal being configured to set a priority corresponding to any access device identity within a target time period.

The router receives a third setting signal, the third setting signal being configured to set a priority corresponding to any access device identity within a target time period.

Table 7 shows a priority corresponding to the access device identity within a target time period.

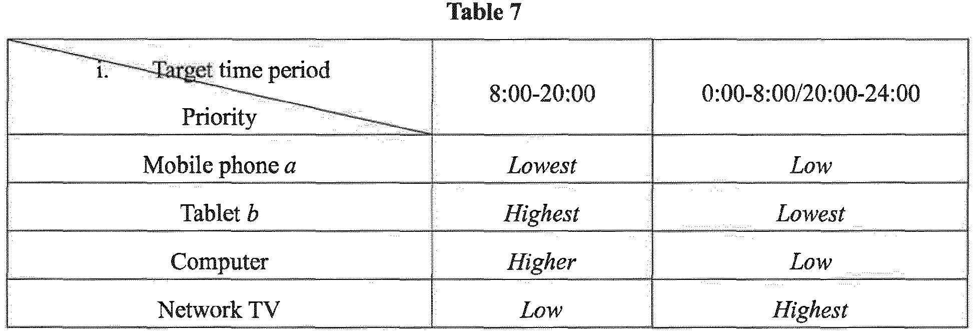

In the embodiment, there are two or more access devices, and the priorities corresponding to the access device identities in different time periods are also different. For example, during daytime (8:00-20:00), child needs to use the tablet *b* to view education programs; therefore, the priority corresponding to the tablet *b* is the highest; the father needs to use the computer to view stocks; therefore, the priority corresponding to the computer is higher; and the mother needs to use the mobile phone *a* to view news; therefore, the priority corresponding to the mobile phone *a* is the lowest. For another example, during evening time (0:00-8:00/20:00-24:00), parents want to watch the network TV; therefore, in the evening, the priority corresponding to the network TV is the highest; and child needs to use the tablet to play games; therefore, the priority corresponding to the tablet is the lowest.

In step 404, a priority corresponding relationship corresponding to the target time period is generated according to the third setting signal, the priority corresponding relationship including the access device identity and the set priority corresponding to the access device identity.

The router generates a priority corresponding relationship corresponding to the target time period according to the third setting signal, the priority corresponding relationship including the access device identity and the set priority corresponding to the access device identity.

For instance, the priority corresponding relationship may be as shown in Table 7.

In step 405, an access device identity is acquired.

When an electronic device accesses to a wireless network, the router acquires an identity of this device (i.e., access device identity). The access device identity may be an MAC address of the access device.

The step 405 may be implemented through the following two different manners.

In the first manner, after a successful access of one access device is achieved, the router acquires an access device identity of this access device.

In the second manner, the router acquires an access device identity of each access device that achieves the access every predetermined time interval.

The predetermined time interval may either be preset in the router, or be set by the user according to the application conditions.

In the embodiment, the method for the router to acquire the access device identity is not limited.

In step 406, a predetermined wireless transmission power corresponding to the access device identity is acquired, each access device identity being corresponding to its respective predetermined wireless transmission power.

The router acquires the predetermined wireless transmission power corresponding to the access device identity, each access device identity being corresponding to its respective predetermined wireless transmission power.

The step 406 may include, but is not limited to the following sub-steps.

In the first sub-step, when the number of the access device identities is two or more, a priority corresponding to each access device identity is inquired, each access device identity being corresponding to its respective priority.

When the number of the access device identities is two or more, the router inquires the priority corresponding to each access device identity, each access device identity being corresponding to its respective priority.

The first sub-step may include, but is not limited to the following sub-steps.
1. The router acquires a current time.
2. The router acquires a priority corresponding relationship corresponding to the current time, each time period being corresponding to its respective priority corresponding relation, and the priority corresponding relationship being a corresponding relationship between the access device identity and the priority.

In the embodiment, the router stores the priority corresponding relationship of each time period according to the priority corresponding relationship stored in Table 7.

3. The priority corresponding to each access device identity is inquired from the priority corresponding relationship corresponding to the current time.

From the priority corresponding relationship corresponding to the current time, the router inquires the priority corresponding to each access device identity.

For example, during daytime (8:00-20:00), child needs to use the tablet to view education programs; therefore, the router inquires that the priority corresponding to the tablet in the daytime is the highest; for another example, during the evening time (0:00-8:00/20:00-24:00), parents want to watch the network TV; therefore, the router inquires that the priority corresponding to the network TV in the evening time is the highest.

In the second sub-step, the predetermined wireless transmission power corresponding to the access device identity having the highest priority is acquired.

The router acquires the access device identity having the highest priority level from the access devices that currently accesses to the router, and acquires the predetermined wireless transmission power corresponding to the access device identity having the highest priority.

For example, 4 access devices accesses to the router in the embodiment; with reference to Table 6 and Table 7, the router acquires a predetermined wireless transmission power *b* corresponding to a tablet *b* having the highest priority in the morning; and the router acquires a predetermined wireless transmission power *g* corresponding to the access device identity of a network TV having the highest priority level in the evening.

In step 407, current transmission power is adjusted according to the predetermined wireless transmission power.

The router adjusts the current transmission power according to the predetermined wireless transmission power. The router may adjust the current transmission power directly according to the acquired predetermined wireless transmission power. Moreover, the router may, after inquiring the user, adjust the current transmission power according to the feedback of the user.

When the router adjusts the current transmission power according to the feedback of the user, the step 407 may include, but is not limited to the following sub-steps.

In the first sub-step, the router sends an adjustment request to the access device corresponding to the access device identity or an administrator device, the access device or the administrator device being configured to feed an adjustment response back according to the adjustment request.

The router sends an adjustment request to the access device corresponding to the access device identity or an administrator device, the access device or the administrator device being configured to feed an adjustment response back according to the adjustment request.

For instance, after the tablet *b* receives the adjustment request sent by the router to the access device corresponding to the tablet *b* or the administrator device, a prompt box is displayed in an interface of the tablet *b*. If the user taps "Cancel" button, it represents that the adjustment is not allowed; and if the user taps "Confirm" button, it represents that the adjustment is allowed.

Moreover, the router may send the adjustment request to the administrator device, wherein the administrator device may be a certain terminal preset by the user.

In the second sub-step, when the received adjustment response represents that the adjustment is allowed, the router adjusts the current transmission power to the predetermined wireless transmission power.

When the adjustment response sent by an electronic device represents that the adjustment is allowed, the router adjusts the current transmission power to the predetermined wireless transmission power.

For instance, when the adjustment response sent by the tablet *b* represents that the adjustment is allowed, the router adjusts the current transmission power to the predetermined wireless transmission power.

Certainly, if the current transmission power of the router and the inquired predetermined wireless transmission power are the same, then the router does not need to adjust the current transmission power.

In conclusion, in the method for adjusting transmission power provided by the embodiments, the access device identity is acquired, the predetermined wireless transmission power corresponding to the access device identity is acquired, and the current transmission power is adjusted according to the predetermined wireless transmission power, thus problems such as waste of resources and influence on the human health caused by a number of routers employing a relative high wireless transmission power are solved, and effects of adjusting the wireless transmission power to a rational wireless transmission power by a gateway device according to the user requirements are achieved.

Also, in the method for adjusting transmission power provided by the embodiments, after a successful access of one access device is achieved, the access device identity of this access device is acquired, or the access device identity of each access device that achieves the access is acquired every predetermined time interval, thus the effects of acquiring the access device identity in time and dynamically adjusting the wireless transmission power of the gateway device are achieved.

Furthermore, in the method for adjusting transmission power provided by the embodiments, the adjustment request is sent to the access device corresponding to the access device identity or the administrator device, and the current transmission power is adjusted to the predetermined wireless transmission power when the received adjustment response represents that the adjustment is allowed, thus the effects of inquiring the user whether to adjust the current transit power to the predetermined wireless transmission power and adjusting the current transmission power after getting the permission of the user are achieved, and the router is prevent from adjusting the current transmission power when the user needs no adjustment.

Embodiments of devices of the present disclosure are described hereinafter, which may be used for performing embodiments of methods of the present disclosure. For the details not described in the embodiments of devices of the present disclosure, please refer to the embodiments of methods of the present disclosure.

Fig. 5 is a block diagram of a device for adjusting transmission power, according to an exemplary embodiment. The device for adjusting transmission power may become part or all of an electronic device, for example, a mobile phone, a tablet, an e-book reader, a multimedia player and a personal digital assistant, and the like using software, hardware or combinations thereof. The device for adjusting transmission power may include: an identity acquisition module 520, a power acquisition module 540 and a power adjustment module 560.

The identity acquisition module 520 is configured to acquire an access device identity.

The power acquisition module 540 is configured to acquire a predetermined wireless transmission power corresponding to the access device identity, each access device identity being corresponding to its respective predetermined wireless transmission power.

The power adjustment module 560 is configured to adjust current transmission power according to the predetermined wireless transmission power.

In conclusion, in the method for adjusting transmission power provided by the embodiments, the access device identity is acquired, the predetermined wireless transmission power corresponding to the access device identity is acquired, and the current transmission power is adjusted according to the predetermined wireless transmission power, thus problems such as waste of resources and influence on the human health caused by a number of routers employing a relative high wireless transmission power are solved, and effects of adjusting the wireless transmission power to a rational wireless transmission power by a gateway device according to the user requirements are achieved.

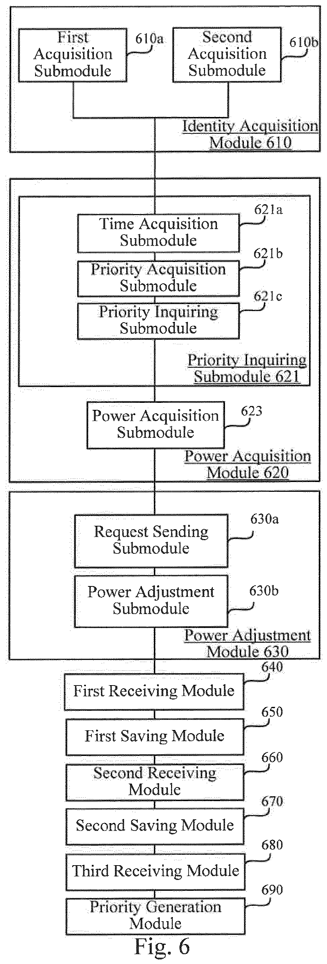

Fig. 6 is a block diagram of a device for adjusting transmission power, according to another exemplary embodiment. The device for adjusting transmission power may become part or all of an electronic device, for example, a mobile phone, a tablet, an e-book reader, a multimedia player and a personal digital assistant, and the like using software, hardware or combinations thereof. The device for adjusting transmission power may include: an identity acquisition module 610, a power acquisition module 620, a power adjustment module 630, a first signal receiving module 640, a first saving module 650, a second signal receiving module 660, a second saving module 670, a third signal receiving module 680 and a priority generation module 690.

Optionally, the power acquisition module 620 includes: a priority inquiring submodule 621 configured to, when the number of the access device identities is two or more, inquire a priority corresponding to each access device identity, each access device identity being corresponding to its respective priority; and a power acquisition submodule 623 configured to acquire a predetermined wireless transmission power corresponding to the access device identity having the highest priority.

Optionally, the priority inquiring submodule 621 includes: a time acquisition submodule 621a configured to acquire a current time; a priority acquisition submodule 621b configured to acquire a priority corresponding relationship corresponding to the current time, each time period being corresponding to its respective priority corresponding relation, and the priority corresponding relationship being a corresponding relationship between the access device identity and the priority; and a priority inquiring submodule 621c configured to inquire the priority corresponding to each access device identity from the priority corresponding relationship corresponding to the current time.

The first receiving module 640 is configured to receive a first setting signal, the first setting signal being configured to set a wireless transmission power corresponding to any access device identity.

The first saving module 650 is configured to save the access device identity and the set predetermined wireless transmission power corresponding to the access device identity according to the first setting signal.

The second receiving module 660 is configured to receive a second setting signal, the second setting signal being configured to set a priority corresponding to any access device identity.

The second saving module 670 is configured to save the access device identity and the set priority corresponding to the access device identity according to the second setting signal.

The third receiving module 680 is configured to receive a third setting signal, the third setting signal being configured to set a priority corresponding to any access device identity within a target time period.

The priority generation module 690 is configured to generate a priority corresponding relationship corresponding to the target time period according to the third setting signal, the priority corresponding relationship including the access device identity and the set priority corresponding to the access device identity.

Optionally, the identity acquisition module 610 includes: a first acquisition submodule 610a configured to, after a successful access of one access device is achieved, acquire the access device identity of this access device; or, a second acquisition submodule 610b configured to acquire the access device identity of each access device that achieves the access every predetermined time interval.

Optionally, the power adjustment module 630 includes: a request sending submodule 630a configured to send an adjustment request to the access device corresponding to the access device identity or an administrator device, the access device or the administrator device being configured to feed an adjustment response back according to the adjustment request; and a power adjustment submodule 630b configured to, when the received adjustment response represents that the adjustment is allowed, adjust the current transmission power to the predetermined wireless transmission power.

In conclusion, in the method for adjusting transmission power provided by the embodiments, the access device identity is acquired, the predetermined wireless transmission power corresponding to the access device identity is acquired, and the current transmission power is adjusted according to the predetermined wireless transmission power, thus problems such as waste of resources and influence on the human health caused by a number of routers employing a relative high wireless transmission power are solved, and effects of adjusting the wireless transmission power to a rational wireless transmission power by a gateway device according to the user requirements are achieved.

Also, in the method for adjusting transmission power provided by the embodiments, after a successful access of one access device is achieved, the access device identity of this access device is acquired, or the access device identity of each access device that achieves the access is acquired every predetermined time interval, thus the effects of acquiring the access device identity in time and dynamically adjusting the wireless transmission power of the gateway device are achieved.

Furthermore, in the method for adjusting transmission power provided by the embodiments, the adjustment request is sent to the access device corresponding to the access device identity or the administrator device, and the current transmission power is adjusted to the predetermined wireless transmission power when the received adjustment response represents that the adjustment is allowed, thus the effects of inquiring the user whether to adjust the current transit power to the predetermined wireless transmission power and adjusting the current transmission power after getting the permission of the user are achieved, and the router is prevent from adjusting the current transmission power when the user needs no adjustment.

With respect to the devices in the above embodiments, the specific manners for performing operations for individual modules therein have been described in detail in the embodiments regarding the methods, which will not be elaborated herein.

Although individual modules have been described according to their respective functions, a single module may be used in place of one or more of the modules described. The modules may be implemented in software, hardware, or a combination.

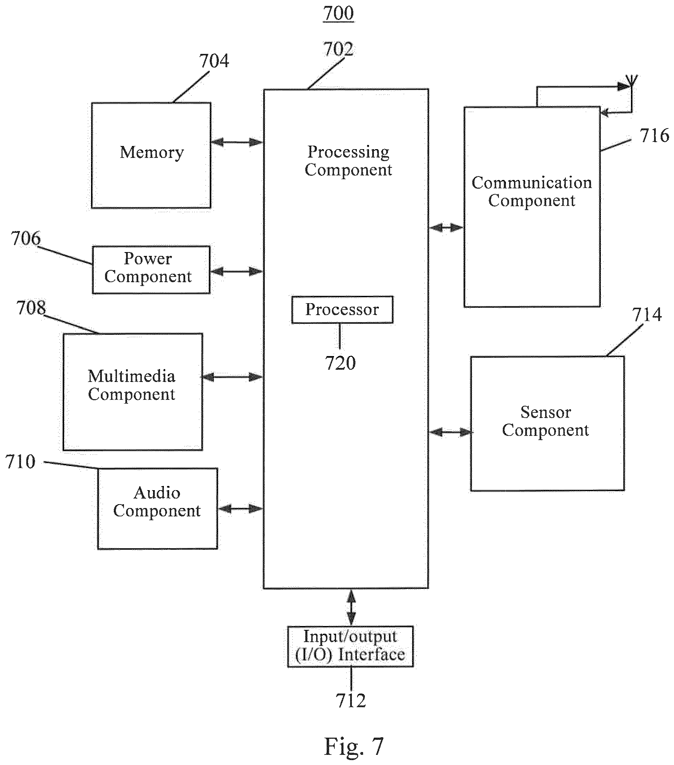

Fig. 7 is a block diagram of a device 700 for adjusting transmission power, according to an exemplary embodiment. For example, the device 700 may be a mobile phone, a computer, a digital broadcast terminal, a messaging device, a gaming console, a tablet, a medical device, exercise equipment, a personal digital assistant, and the like.

Referring to Fig. 7, the device 700 may include one or more of the following components: a processing component 702, a memory 704, a power component 706, a multimedia component 708, an audio component 710, an input/output (I/O) interface 712, a sensor component 714, and a communication component 716.

The processing component 702 typically controls overall operations of the device 700, such as the operations associated with display, telephone calls, data communications, camera operations, and recording operations. The processing component 702 may include one or more processors 720 to execute instructions to perform all or part of the steps in the above described methods. Moreover, the processing component 702 may include one or more modules which facilitate the interaction between the processing component 702 and other components. For instance, the processing component 702 may include a multimedia module to facilitate the interaction between the multimedia component 708 and the processing component 702.

The memory 704 is configured to store various types of data to support the operation of the device 700. Examples of such data include instructions for any applications or methods operated on the device 700, contact data, phonebook data, messages, pictures, video, etc. The memory 704 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 706 provides power to various components of the device 700. The power component 706 may include a power management system, one or more power sources, and any other components associated with the generation, management, and distribution of power in the device 700.

The multimedia component 708 includes a screen providing an output interface between the device 700 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 708 includes a front camera and/or a rear camera. The front camera and/or the rear camera may receive an external multimedia datum while the device 700 is in an operation mode, such as a photographing mode or a video mode. Each of the front camera and the rear camera may be a fixed optical lens system or have focus and optical zoom capability.

The audio component 710 is configured to output and/or input audio signals. For example, the audio component 710 includes a microphone ("MIC") configured to receive an external audio signal when the device 700 is in an operation mode, such as a call mode, a recording mode, and a voice recognition mode. The received audio signal may be further stored in the memory 704 or transmitted via the communication component 716. In some embodiments, the audio component 710 further includes a speaker to output audio signals.

The I/O interface 712 provides an interface between the processing component 702 and peripheral interface modules, such as a keyboard, a click wheel, buttons, and the like. The buttons may include, but are not limited to, a home button, a volume button, a starting button, and a locking button.

The sensor component 714 includes one or more sensors to provide status assessments of various aspects of the device 700. For instance, the sensor component 714 may detect an open/closed status of the device 700, relative positioning of components, e.g., the display and the keypad, of the device 700, a change in position of the device 700 or a component of the device 700, a presence or absence of user contact with the device 700, an orientation or an acceleration/deceleration of the device 700, and a change in temperature of the device 700. The sensor component 714 may include a proximity sensor configured to detect the presence of nearby objects without any physical contact. The sensor component 714 may also include a light sensor, such as a CMOS or CCD image sensor, for use in imaging applications. In some embodiments, the sensor component 714 may also include an accelerometer sensor, a gyroscope sensor, a magnetic sensor, a pressure sensor, or a temperature sensor.

The communication component 716 is configured to facilitate communication, wired or wirelessly, between the device 700 and other devices. The device 700 can access a wireless network based on a communication standard, such as WiFi, 2G, or 3G, or a combination thereof. In one exemplary embodiment, the communication component 716 receives a broadcast signal or broadcast associated information from an external broadcast management system via a broadcast channel. In one exemplary embodiment, the communication component 716 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 700 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods for adjusting transmission power as shown in Fig. 1, Fig. 2A, Fig. 3 or Fig. 4.

In exemplary embodiments, there is also provided a non-transitory computer readable storage medium including instructions, such as included in the memory 704, executable by the processor 720 in the device 700, for performing the above-described methods for adjusting transmission power as shown in Fig. 1, Fig. 2A, Fig. 3 or Fig. 4. For example, the non-transitory computer-readable storage medium may be a ROM, a RAM, a CD-ROM, a magnetic tape, a floppy disc, an optical data storage device, and the like.

The non-transitory computer-readable storage medium including instructions, executable by a processor in the device 700, for the performing the above described methods for adjusting transmission power as shown in Fig. 1, Fig. 2A, Fig. 3 or Fig. 4 by the device 700.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It will be appreciated that the present invention is not limited to the exact construction that has been described above and illustrated in the accompanying drawings, and that various modifications and changes can be made without departing from the scope thereof. It is intended that the specification and examples be considered as exemplary only, with the scope of the invention defined by the following claims.

## Claims

1. A method for adjusting transmission power of a gateway device, wherein the method is applied in a gateway device, and comprises:
acquiring (102, 203, 305, 405) an access device identity;
acquiring (104, 204, 306, 406) a predetermined wireless transmission power corresponding to the access device identity, each access device identity corresponding to a respective predetermined wireless transmission power; and
adjusting (106, 205, 307, 407) current transmission power of the gateway device according to the predetermined wireless transmission power;
**characterised in that**, the step of adjusting (106, 205, 307, 407) the current transmission power according to the predetermined wireless transmission power comprises:
sending an adjustment request to an access device corresponding to the access device identity or an administrator device, the access device corresponding to the access device identity or the administrator device being configured to feed an adjustment response back according to the adjustment request; and
when the received adjustment response represents that the adjustment is allowed, adjusting the current transmission power to the predetermined wireless transmission power.

2. The method according to claim 1, **characterized in that**, the step of acquiring (104, 204, 306, 406) the predetermined wireless transmission power corresponding to the access device identity comprises:
when the number of the access devices is two or more, inquiring a priority corresponding to each access device identity, each access device identity corresponding to a respective priority; and
acquiring a predetermined wireless transmission power corresponding to the access device identity having the highest priority.

3. The method according to claim 2, **characterized in that**, the inquiring the priority corresponding to each access device identity comprises:
acquiring a current time;
acquiring a priority corresponding relationship corresponding to the current time, each time period corresponding to a respective priority corresponding relationship, and the priority corresponding relationship being a corresponding relationship between the access device identity and the priority; and
inquiring the priority corresponding to each access device identity from the priority corresponding relationship corresponding to the current time.

4. The method according to any one of claims 1 to 3, **characterized in that**, the method further comprises:
receiving (201, 301, 401) a first setting signal, the first setting signal being configured to set a predetermined wireless transmission power corresponding to a respective access device identity; and
saving (202, 302, 402) the access device identity and the set predetermined wireless transmission power corresponding to the access device identity according to the first setting signal.

5. The method according to claim 2 or 3, **characterized in that**, the method further comprises: receiving a second setting signal (303), the second setting signal being configured to set a priority corresponding to a respective access device identity; and
saving (304) the access device identity and the set priority corresponding to the access device identity according to the second setting signal.

6. The method according to claim 3, **characterized in that**, the method further comprises:
receiving (403) a third setting signal, the third setting signal being configured to set a priority corresponding to a respective access device identity within a target time period; and
generating (404) a priority corresponding relationship corresponding to the target time period according to the third setting signal, the priority corresponding relationship comprising the access device identity and the set priority corresponding to the access device identity

7. The method according to any one of claims 1 to 3, **characterized in that**, the step of acquiring (102, 203, 305, 405) the access device identity comprises:
after one access device successfully accesses to the gateway device, acquiring the access device identity of this access device; or,
acquiring the access device identity of each access device that accesses to the gateway device every a predetermined time interval.

8. A device for adjusting transmission power of a gateway device, wherein the device is applied in a gateway device, and comprises:
an identity acquisition module (520, 610) configured to acquire an access device identity;
a power acquisition module (540, 620) configured to acquire a predetermined wireless transmission power corresponding to the access device identity, each access device identity corresponding to a respective predetermined wireless transmission power; and
a power adjustment module (560, 630) configured to adjust current transmission power of the gateway device according to the predetermined wireless transmission power; **characterized in that** the device is configured to:
send an adjustment request to an access device corresponding to the access device identity or an administrator device, the access device corresponding to the access device identity or the administrator device being configured to feed an adjustment response back according to the adjustment request; and
when the received adjustment response represents that the adjustment is allowed, adjust the current transmission power to the predetermined wireless transmission power.

9. The device according to claim 8, **characterized in that**, the power acquisition module (620) comprises:
a priority inquiring submodule (621) configured to, when the number of the access device identities is two or more, inquire a priority corresponding to each access device identity, each access device identity corresponding to a respective priority; and
a power acquisition submodule (623) configured to acquire a predetermined wireless transmission power corresponding to the access device identity having the highest priority.

10. The device according to claim 9, **characterized in that**, the priority inquiring submodule (621) comprises:
a time acquisition submodule (621a) configured to acquire a current time;
a priority acquisition submodule (621b) configured to acquire a priority corresponding relationship corresponding to the current time, each time period corresponding to a respective priority corresponding relation, and the priority corresponding relationship being a corresponding relationship between the access device identity and the priority; and
a time-based priority inquiring submodule (621c) configured to inquire the priority corresponding to each access device identity from the priority corresponding relationship corresponding to the current time.

11. The device according to any one of claims 8 to 10, **characterized in that**, the device further comprises:
a first receiving module (640) configured to receive a first setting signal, the first setting signal being configured to set a predetermined wireless transmission power corresponding to a respective access device identity; and
a first saving module (650) configured to save the access device identity and the set predetermined wireless transmission power corresponding to the access device identity according to the first setting signal.

12. The device according to claim 9 or 10, **characterized in that**, the device further comprises:
a second receiving module (660) configured to receive a second setting signal, the second setting signal being configured to set a priority corresponding to a respective access device identity; and
a second saving module (670) configured to save the access device identity and the set priority corresponding to the access device identity according to the second setting signal.

13. The device according to claim 8, wherein the device further comprises:
a third receiving module (680) configured to receive a third setting signal, the third setting signal being configured to set a priority corresponding to a respective access device identity within a target time period; and
a priority generation module (690) configured to generate a priority corresponding relationship corresponding to the target time period according to the third setting signal, the priority corresponding relationship comprising the access device identity and the set priority corresponding to the access device identity.

14. A device for adjusting transmission power, the device comprising:
a processor (720); and
a memory (704) for storing instructions executable by the processor (720);
wherein the processor (720) is configured to:
perform the steps of method claims 1 to 7.

15. A computer program, which when executing on a processor of a terminal, performs a method according to any one of claims 1 to 7.

## Patentansprüche

1. Verfahren zum Einstellen von Sendeleistung eines Gateway-Geräts, wobei das Verfahren in einem Gateway-Gerät angewendet wird und Folgendes beinhaltet:
Erfassen (102, 203, 305, 405) einer Zugangsgeräteidentität;
Erfassen (104, 204, 306, 406) einer vorbestimmten drahtlosen Sendeleistung entsprechend der Zugangsgeräteidentität, wobei jede Zugangsgeräteidentität einer jeweiligen vorbestimmten drahtlosen Sendeleistung entspricht; und
Justieren (106, 205, 307, 407) von aktueller Sendeleistung des Gateway-Geräts gemäß der vorbestimmten drahtlosen Sendeleistung;
**dadurch gekennzeichnet, dass** der Schritt des Justierens (106, 205, 307, 407) der aktuellen Sendeleistung gemäß der vorbestimmten drahtlosen Sendeleistung Folgendes beinhaltet:
Senden einer Justieranforderung zu einem Zugangsgerät entsprechend der Zugangsgeräteidentität oder einem Administratorgerät, wobei das Zugangsgerät entsprechend der Zugangsgeräteidentität oder dem Administratorgerät zum Zurückgeben einer Justierantwort gemäß der Justieranforderung konfiguriert ist; und
wenn die empfangene Justierantwort repräsentiert, dass die Justierung zulässig ist, Justieren der aktuellen Sendeleistung auf die vorbestimmte drahtlose Sendeleistung.

2. Verfahren nach Anspruch 1, **dadurch gekennzeichnet, dass** der Schritt des Erfassens (104, 204, 306, 406) der vorbestimmten drahtlosen Sendeleistung entsprechend der Zugangsgeräteidentität Folgendes beinhaltet:
Abfragen, wenn die Anzahl der Zugangsgeräte zwei oder mehr ist, einer Priorität entsprechend jeder Zugangsgeräteidentität, wobei jede Zugangsgeräteidentität einer jeweiligen Priorität entspricht; und
Erfassen einer vorbestimmten drahtlosen Sendeleistung entsprechend der Zugangsgeräteidentität mit der höchsten Priorität.

3. Verfahren nach Anspruch 2, **dadurch gekennzeichnet, dass** das Abfragen der Priorität entsprechend jeder Zugangsgeräteidentität Folgendes beinhaltet:
Erfassen einer aktuellen Zeit;
Erfassen einer Priorität entsprechenden Beziehung entsprechend der aktuellen Zeit, wobei jede Zeitperiode einer jeweiligen Priorität entsprechenden Beziehung entspricht und wobei die Priorität entsprechende Beziehung eine entsprechende Beziehung zwischen der Zugangsgeräteidentität und der Priorität ist; und
Abfragen der Priorität entsprechend jeder Zugangsgeräteidentität von der Priorität entsprechenden Beziehung entsprechend der aktuellen Zeit.

4. Verfahren nach einem der Ansprüche 1 bis 3, **dadurch gekennzeichnet, dass** das Verfahren ferner Folgendes beinhaltet:
Empfangen (201, 301, 401) eines ersten Einstellsignals, wobei das erste Einstellsignal zum Einstellen einer vorbestimmten drahtlosen Sendeleistung entsprechend einer jeweiligen Zugangsgeräteidentität konfiguriert ist; und
Speichern (202, 302, 402) der Zugangsgeräteidentität und der eingestellten vorbestimmten drahtlosen Sendeleistung entsprechend der Zugangsgeräteidentität gemäß dem ersten Einstellsignal.

5. Verfahren nach Anspruch 2 oder 3, **dadurch gekennzeichnet, dass** das Verfahren ferner Folgendes beinhaltet:
Empfangen eines zweiten Einstellsignals (303), wobei das zweite Einstellsignal zum Einstellen einer Priorität entsprechend einer jeweiligen Zugangsgeräteidentität konfiguriert ist; und
Speichern (304) der Zugangsgeräteidentität und der eingestellten Priorität entsprechend der Zugangsgeräteidentität gemäß dem zweiten Einstellsignal.

6. Verfahren nach Anspruch 3, **dadurch gekennzeichnet, dass** das Verfahren ferner Folgendes beinhaltet:
Empfangen (403) eines dritten Einstellsignals, wobei das dritte Einstellsignal zum Einstellen einer Priorität entsprechend einer jeweiligen Zugangsgeräteidentität innerhalb einer Zielzeitperiode konfiguriert ist; und
Erzeugen (404) einer Priorität entsprechenden Beziehung entsprechend der Zielzeitperiode gemäß dem dritten Einstellsignal, wobei die Priorität entsprechende Beziehung die Zugangsgeräteidentität und die eingestellte Priorität entsprechend der Zugangsgeräteidentität umfasst.

7. Verfahren nach einem der Ansprüche 1 bis 3, **dadurch gekennzeichnet, dass** der Schritt des Erfassens (102, 203, 305, 405) der Zugangsgeräteidentität Folgendes beinhaltet:
Erfassen, nachdem ein Zugangsgerät erfolgreich auf das Gateway-Gerät zugegriffen hat, der Zugangsgeräteidentität dieses Zugangsgeräts; oder
Erfassen der Zugangsgeräteidentität jedes Zugangsgeräts, das auf das Gateway-Gerät zugreift, jeweils in vorbestimmten Zeitintervallen.

8. Gerät zum Justieren von Sendeleistung eines Gateway-Geräts, wobei das Gerät in einem Gateway-Gerät angewendet wird und Folgendes umfasst:
ein Identitätserfassungsmodul (520, 610), konfiguriert zum Erfassen einer Zugangsgeräteidentität;
ein Leistungserfassungsmodul (540, 620), konfiguriert zum Erfassen einer vorbestimmten drahtlosen Sendeleistung entsprechend der Zugangsgeräteidentität, wobei jede Zugangsgeräteidentität einer jeweiligen vorbestimmten drahtlosen Sendeleistung entspricht; und
ein Leistungsjustiermodul (560, 630), konfiguriert zum Justieren von aktueller Sendeleistung des Gateway-Geräts gemäß der vorbestimmten drahtlosen Sendeleistung;
**dadurch gekennzeichnet, dass** das Gerät konfiguriert ist zum:
Senden einer Justieranforderung zu einem Zugangsgerät entsprechend der Zugangsgeräteidentität oder einem Administratorgerät, wobei das Zugangsgerät entsprechend der Zugangsgeräteidentität oder dem Administratorgerät zum Zurückgeben einer Justierantwort gemäß der Justieranforderung konfiguriert ist; und
Justieren, wenn die empfangene Justierantwort repräsentiert, dass die Justierung zulässig ist, der aktuellen Sendeleistung auf die vorbestimmte drahtlose Sendeleistung.

9. Gerät nach Anspruch 8, **dadurch gekennzeichnet, dass** das Leistungserfassungsmodul (620) Folgendes umfasst:
ein Prioritätsabfragesubmodul (621), konfiguriert zum Abfragen, wenn die Anzahl der Zugangsgeräteidentitäten zwei oder höher ist, einer Priorität entsprechend jeder Zugangsgeräteidentität, wobei jede Zugangsgeräteidentität einer jeweiligen Priorität entspricht; und
ein Leistungserfassungssubmodul (623), konfiguriert zum Erfassen einer vorbestimmten drahtlosen Sendeleistung entsprechend der Zugangsgeräteidentität mit der höchsten Priorität.

10. Gerät nach Anspruch 9, **dadurch gekennzeichnet, dass** das Prioritätsabfragesubmodul (621) Folgendes umfasst:
ein Zeiterfassungssubmodul (621a), konfiguriert zum Erfassen einer aktuellen Zeit;
ein Prioritätserfassungssubmodul (621b), konfiguriert zum Erfassen einer Priorität entsprechenden Beziehung entsprechend der aktuellen Zeit, wobei jede Zeitperiode einer jeweiligen Priorität entsprechenden Beziehung entspricht und wobei die Priorität entsprechende Beziehung eine entsprechende Beziehung zwischen der Zugangsgeräteidentität und der Priorität ist; und
ein zeitbasiertes Prioritätsabfragesubmodul (621c), konfiguriert zum Abfragen der Priorität entsprechend jeder Zugangsgeräteidentität von der Priorität entsprechenden Beziehung entsprechend der aktuellen Zeit.

11. Gerät nach einem der Ansprüche 8 bis 10, **dadurch gekennzeichnet, dass** das Gerät ferner Folgendes umfasst:
ein erstes Empfangsmodul (640), konfiguriert zum Empfangen eines ersten Einstellsignals, wobei das erste Einstellsignal zum Einstellen einer vorbestimmten drahtlosen Sendeleistung entsprechend einer jeweiligen Zugangsgeräteidentität konfiguriert ist; und
ein erstes Speichermodul (650), konfiguriert zum Speichern der Zugangsgeräteidentität und der eingestellten vorbestimmten drahtlosen Sendeleistung entsprechend der Zugangsgeräteidentität gemäß dem ersten Einstellsignal.

12. Gerät nach Anspruch 9 oder 10, **dadurch gekennzeichnet, dass** das Gerät ferner Folgendes umfasst:
ein zweites Empfangsmodul (660), konfiguriert zum Empfangen eines zweiten Einstellsignals, wobei das zweite Einstellsignal zum Einstellen einer Priorität entsprechend einer jeweiligen Zugangsgeräteidentität konfiguriert ist; und
ein zweites Speichermodul (670), konfiguriert zum Speichern der Zugangsgeräteidentität und der eingestellten Priorität entsprechend der Zugangsgeräteidentität gemäß dem zweiten Einstellsignal.

13. Gerät nach Anspruch 8, wobei das Gerät ferner Folgendes umfasst:
ein drittes Empfangsmodul (680), konfiguriert zum Empfangen eines dritten Einstellsignals, wobei das dritte Einstellsignal zum Einstellen einer Priorität entsprechend einer jeweiligen Zugangsgeräteidentität innerhalb einer Zielzeitperiode konfiguriert ist; und
ein Prioritätserzeugungsmodul (690), konfiguriert zum Erzeugen einer Priorität entsprechenden Beziehung entsprechend der Zielzeitperiode gemäß dem dritten Einstellsignal, wobei die Priorität entsprechende Beziehung die Zugangsgeräteidentität und die eingestellte Priorität entsprechend der Zugangsgeräteidentität umfasst.

14. Gerät zum Justieren von Sendeleistung, wobei das Gerät Folgendes umfasst:
einen Prozessor (720); und
einen Speicher (704) zum Speichern von von dem Prozessor (720) ausführbaren Befehlen;
wobei der Prozessor (720) konfiguriert ist zum:
Ausführen der Schritte des Verfahrens nach den Ansprüchen 1 bis 7.

15. Computerprogramm, das bei Ausführung auf einem Prozessor eines Endgeräts ein Verfahren nach einem der Ansprüche 1 bis 7 ausführt.

## Revendications

1. Procédé d'ajustement de la puissance de transmission d'un dispositif passerelle, où le procédé est appliqué dans un dispositif passerelle, et comprend :
acquérir (102, 203, 305, 405) une identité de dispositif d'accès ;
acquérir (104, 204, 306, 406) une puissance de transmission sans fil prédéterminée correspondant à l'identité du dispositif d'accès, chaque identité de dispositif d'accès correspondant à une puissance de transmission sans fil prédéterminée respective ; et
ajuster (106, 205, 307, 407) une puissance de transmission courante du dispositif passerelle conformément à la puissance de transmission sans fil prédéterminée ;
**caractérisé en ce que**, l'étape d'ajustement (106, 205, 307, 407) de la puissance de transmission courante conformément à la puissance de transmission sans fil prédéterminée comprend :
envoyer une requête d'ajustement à un dispositif d'accès correspondant à l'identité du dispositif d'accès ou à un dispositif administrateur, le dispositif d'accès correspondant à l'identité du dispositif d'accès ou le dispositif administrateur étant configuré pour renvoyer une réponse d'ajustement conformément à la requête d'ajustement ; et
lorsque la réponse d'ajustement reçue représente que l'ajustement est autorisé, ajuster la puissance de transmission courante à la puissance de transmission sans fil prédéterminée.

2. Procédé selon la revendication 1, **caractérisé en ce que**, l'étape d'acquisition (104, 204, 306, 406) de la puissance de transmission sans fil prédéterminée correspondant à l'identité du dispositif d'accès comprend :
lorsque le nombre de dispositifs d'accès est de deux ou plus, consulter une priorité correspondant à chaque identité de dispositif d'accès, chaque identité de dispositif d'accès correspondant à une priorité respective ; et
acquérir une puissance de transmission sans fil prédéterminée correspondant à l'identité du dispositif d'accès ayant la plus haute priorité.

3. Procédé selon la revendication 2, **caractérisé en ce que**, la consultation de la priorité correspondant à chaque identité de dispositif d'accès, comprend :
acquérir une heure courante ;
acquérir une relation correspondant à une priorité correspondant à l'heure courante, chaque période de temps correspondant à une relation correspondant à une priorité respective, et la relation correspondant à une priorité étant une relation correspondante entre l'identité du dispositif d'accès et la priorité ; et
consulter la priorité correspondant à chaque identité de dispositif d'accès de la relation correspondant à la priorité correspondant à l'heure courante.

4. Procédé selon l'une quelconque des revendications 1 à 3, **caractérisé en ce que** le procédé comprend en outre :
recevoir (201, 301, 401), un premier signal de réglage, le premier signal de réglage étant configuré pour régler une puissance de transmission sans fil prédéterminée correspondant à une identité respective de dispositif d'accès ; et
sauvegarder (202, 302, 402) l'identité du dispositif d'accès et la puissance de transmission sans fil prédéterminée correspondant à l'identité du dispositif d'accès conformément au premier signal de réglage.

5. Procédé selon la revendication 2 ou 3, **caractérisé en ce que** le procédé comprend en outre :
recevoir un deuxième signal de réglage (303), le deuxième signal de réglage étant configuré pour régler une priorité correspondant à une identité respective de dispositif d'accès ; et
sauvegarder (304) l'identité du dispositif d'accès et la priorité réglée correspondant à l'identité du dispositif d'accès conformément au deuxième signal de réglage.

6. Procédé selon la revendication 3, **caractérisé en ce que** le procédé comprend en outre :
recevoir (403) un troisième signal de réglage, le troisième signal de réglage étant configuré pour régler une priorité correspondant à une identité respective de dispositif d'accès dans une période de temps cible ; et
générer (404) une relation correspondant à une priorité correspondant à la période de temps cible conformément au troisième signal de réglage, la relation correspondant à une priorité comprenant l'identité du dispositif d'accès et la priorité réglée correspondant à l'identité du dispositif d'accès.

7. Procédé selon l'une quelconque des revendications 1 à 3, **caractérisé en ce que** l'étape d'acquisition (102, 203, 305, 405) de l'identité du dispositif d'accès comprend :
après qu'un dispositif d'accès a accédé avec succès au dispositif passerelle, acquérir l'identité de dispositif d'accès de ce dispositif d'accès ; ou bien,
acquérir l'identité de dispositif d'accès de chaque dispositif d'accès qui accède au dispositif passerelle à tous les intervalles de temps prédéterminés.

8. Dispositif d'ajustement de la puissance de transmission d'un dispositif passerelle, où le dispositif est appliqué dans un dispositif passerelle et comprend :
un module d'acquisition d'identité (520, 610) configuré pour acquérir une identité de dispositif d'accès ;
un module d'acquisition de puissance (540, 620) configuré pour acquérir une puissance de transmission sans fil prédéterminée correspondant à l'identité du dispositif d'accès, chaque identité de dispositif d'accès correspondant à une puissance de transmission sans fil prédéterminée respective ; et
un module d'ajustement de puissance (560, 630) configuré pour ajuster la puissance de transmission courante du dispositif passerelle conformément à la puissance de transmission sans fil prédéterminée ;
**caractérisé en ce que** le dispositif est configuré pour :
envoyer une requête d'ajustement à un dispositif d'accès correspondant à l'identité du dispositif d'accès ou à un dispositif administrateur, le dispositif d'accès correspondant à l'identité du dispositif d'accès ou le dispositif administrateur étant configuré pour renvoyer une réponse d'ajustement conformément à la requête d'ajustement ; et
lorsque la réponse d'ajustement reçue représente que l'ajustement est autorisé, ajuster la puissance de transmission courante à la puissance de transmission sans fil prédéterminée.

9. Dispositif selon la revendication 8, **caractérisé en ce que** le module d'acquisition de puissance (620) comprend :
un sous-module de consultation de priorité (623) configuré pour, lorsque le nombre d'identités de dispositif d'accès est de deux ou plus, consulter une priorité correspondant à chaque identité de dispositif d'accès, chaque identité de dispositif d'accès correspondant à une priorité respective ; et
un sous-module d'acquisition de puissance (623) configuré pour acquérir une puissance de transmission sans fil prédéterminée correspondant à l'identité du dispositif d'accès ayant la plus haute priorité.

10. Dispositif selon la revendication 9, **caractérisé en ce que** le sous-module de consultation de priorité (621) comprend :
un sous-module d'acquisition d'heure (621a) configuré pour acquérir une heure courante ;
un sous-module d'acquisition de priorité (621b) configuré pour acquérir une relation correspondant à une priorité correspondant à l'heure courante, chaque période de temps correspondant à une relation correspondant à une priorité respective, et la relation correspondant à une priorité étant une relation correspondante entre l'identité du dispositif d'accès et à la priorité ; et
un sous-module de consultation de priorité à base de temps (621c) configuré pour consulter la priorité correspondant à chaque identité de dispositif d'accès de la relation correspondant à la priorité correspondant à l'heure courante.

11. Dispositif selon l'une quelconque des revendications 8 à 10, **caractérisé en ce que** le dispositif comprend en outre :
un premier module de réception (640) configuré pour recevoir un premier signal de réglage, le premier signal de réglage étant configuré pour régler une puissance de transmission sans fil prédéterminée correspondant à une identité respective de dispositif d'accès ; et
un premier module de sauvegarde (650) configuré pour sauvegarder l'identité du dispositif d'accès et la puissance de transmission sans fil prédéterminée correspondant à l'identité du dispositif d'accès conformément au premier signal de réglage.

12. Dispositif selon la revendication 9 ou 10, **caractérisé en ce que** le dispositif comprend en outre :
un deuxième module de réception (660) configuré pour recevoir un deuxième signal de réglage, le deuxième signal de réglage étant configuré pour régler une priorité correspondant à une identité respective de dispositif d'accès ; et
un deuxième module de sauvegarde (670) configuré pour sauvegarder l'identité du dispositif d'accès et la priorité réglée correspondant à l'identité du dispositif d'accès conformément au deuxième signal de réglage.

13. Dispositif selon la revendication 8, où le dispositif comprend en outre :
un troisième module de réception (680) configuré pour recevoir un troisième signal de réglage, le troisième signal de réglage étant configuré pour régler une priorité correspondant à une identité respective de dispositif d'accès dans une période de temps cible ; et
un module de génération de priorité (690) configuré pour générer une relation correspondant à une priorité correspondant à la période de temps cible conformément au troisième signal de réglage, la relation correspondant à une priorité comprenant l'identité du dispositif d'accès et la priorité réglée correspondant à l'identité du dispositif d'accès.

14. Dispositif d'ajustement de puissance de transmission, le dispositif comprenant :
un processeur (720) ; et
une mémoire (704) pour stocker des instructions exécutables par le processeur (720) ;
dans lequel le processeur (720) est configuré pour :
effectuer les étapes du procédé selon les revendications 1 à 7.

15. Programme informatique, qui lorsque exécuté sur un processeur d'un terminal, effectue un procédé selon l'une quelconque des revendications 1 à 7.
